# EUROPEAN PATENT APPLICATION

(11) **EP 4 825 356 A1**
(43) Date of publication of application: **21.10.2026**
(21) Application number: 26152270.0
(22) Date of filing: 16.01.2026
(51) Int. Cl.: A61H 1/00, A47C 7/02, A47C 7/40, A47C 9/00, A47C 1/034

(54) **SEATING FURNITURE**

(30) Priority: 17.04.2025 DE 202025102162 U
(71) Applicant: CIAR S.p.A., 61122 Pesaro (PU) (IT)
(72) Inventor: Loccioni, Diego, 61122 Pesaro (IT)
(74) Representative: Tetzner, Michael

(57) **Abstract**

The invention relates to a seating furniture with a seat (1) pivotable about a first axis (1c), which extends parallel to the seat (1), and a backrest (2) pivotable about a second axis (2c), which extends parallel to the backrest (2), wherein the seating furniture has a longitudinal central plane (5) and the first axis (1c) and the second axis (2c) extend in this longitudinal central plane (5).

## Description

The invention relates to a piece of seating furniture with a seat pivotable about a first axis and a backrest pivotable about a second axis.

In today's world, most people spend a lot of time sitting, especially when eating, driving, working and, last but not least, relaxing on the sofa. Prolonged, static sitting leads to overloading of the vertebral bone structure and stress in the muscles. The consequences of this lifestyle are obvious to everyone and lead to severe tension in the back, shoulders and neck.

To relieve such tension, massage chairs are known, for example, which have integrated and powered massage bodies in the backrest. Although such massage chairs are perceived as very pleasant, it is of course more practical if the tension does not arise in the first place. It is therefore advantageous for people who spend a lot of time sitting to pay attention to "dynamic sitting", as small and frequent changes in sitting can largely prevent back pain. For example, WO 03/068027 A1 describes a piece of seating furniture that has a left and right seat section, each of which can be moved around a horizontal axis. The backrest also consists of a left and a right half, which can also be pivoted about a horizontal axis.

The invention is now based on the task of creating a piece of seating furniture which effectively counteracts any back pain, even when sitting for long periods.

According to the invention, this task is solved by the features of claim 1, wherein the seating furniture has a seat pivotable about a first axis and a backrest pivotable about a second axis, wherein the first axis extends parallel to the seat and the second axis extends parallel to the backrest and the seating furniture has a longitudinal central plane, wherein the first axis and the second axis extend in this longitudinal central plane.

The longitudinal center plane is the plane that divides the seat into a right and left half. Thus, the longitudinal center plane of the seating furniture, which is spanned by the first and second axes, coincides with the sagittal plane of a person sitting on the seating furniture. The seating furniture according to the invention enables simultaneous mobilization of the pelvis, spine, ribs and shoulders by requiring the user to constantly compensate for the rotational and counter-rotational movements (torsion of the trunk).

A particularly effective torsion of the user's torso occurs when the first axis and the second axis intersect and the angle between the first axis and the second axis essentially corresponds to the angle between the seat and the backrest.

The term dynamic sitting means "movement while sitting", whereby the movement can take place in an "active" or "passive" form. In "active dynamic sitting", the person sitting on the chair performs continuous movements, frequently changing position due to the movable seat and backrest. In "passive dynamic sitting", on the other hand, there are one or more drives that are able to transfer coordinated (synchronized) movements to the person sitting in the chair. The advantages of dynamic sitting are manifold. The frequent, "forced" change of sitting position generates continuous activation of the back muscles, which prevents shortening of the various muscle groups and counteracts the occurrence of back pain. In addition, frequent changes of position not only have a positive effect on the muscles, but also on the spine and the intervertebral discs.

According to a preferred embodiment of the invention, a first actuator is therefore provided for moving the pivotable seat back and forth about the first axis and/or a second actuator is provided for moving the pivotable backrest back and forth about the second axis.

When the first actuator is activated, the seated person's body weight can be shifted from the right buttock muscle to the left, whereby the movement can be coordinated with the entire torso and shoulders, particularly with the support of the second actuator. Preferably, the movement of the seat and backrest is very slow and continuous, for example 40 to 500 cycles, preferably 60 to 400 cycles per hour. The gentle, rhythmic and non-invasive movement creates a natural tension in the muscles, which can relax and stretch in a pleasant and natural way.

In particular, the movement naturally activates the muscles between the pelvis and ribs. It also stimulates the metabolism and the supply of nutrients to the muscles and intervertebral discs. There is also a reduction in signs of fatigue due to incorrect posture and continuous strain on the muscles, as well as improved breathing thanks to the reduced tension in the shoulder and intercostal muscles.

According to a preferred embodiment of the invention, the seat has a seat frame that can pivot about the first axis. Furthermore, a backrest frame pivotable about the second axis can be provided on the backrest. According to a further embodiment, the seat has a main seat frame, wherein the pivotable seat frame is pivotable relative to the main seat frame about the first axis. Similarly, a main backrest frame may be provided on the backrest, wherein the pivotable backrest frame is pivotable relative to the main backrest frame about the second axis.

The pivotable seat frame and the pivotable backrest frame can be actuated by means of the first and second actuators and pivot about their respective axes. The movement of the seat frame and the backrest frame are conveniently synchronized in such a way that when the right half of the seat is lowered, the right half of the backrest moves forwards, resulting in a forced torsion of the torso relative to the pelvis of the seated person. The left half of the seat is then lowered while the left half of the backrest is moved forward.

According to a preferred embodiment of the invention, the longitudinal center plane of the seating furniture defined by the first and second axes coincides with the sagittal plane of a person sitting on the seating furniture, whereby the seat and the backrest are divided by the sagittal plane into a left and a right seat half and a left and a right backrest half, respectively. The drive control is preferably designed for synchronized movement of the seat frame and the backrest frame, so that when the right seat half is lowered, the right backrest half moves forward and, correspondingly, when the left seat half is lowered, the left backrest half moves forward, resulting in a forced torsion of the torso relative to the pelvis when a person is sitting on the seat.

To control the first and/or second actuator, a drive control is provided, which is designed so that the first and/or second actuator performs a reciprocating swivel movement of the seat and/or the backrest. In particular, the drive control can be designed in such a way that the speed and/or frequency of the swivel movement triggered by the first and/or second actuator can be adjusted. A continuous, reciprocating swivel movement can be carried out. Preferably, a minimum of 60 and a maximum of 400 cycles per hour can be set.

It is also conceivable that the drive control is designed to control the first and/or second actuator by means of pulse width modulation. As a result, the rotation/swivel speed can be set by the user within a wide range, whereby values can also be set so low that the movement of the seat frame/backrest is no longer perceived.

By means of the synchronized pivoting movements of the seat frame and the backrest frame, the positive effects on the body that are otherwise achieved during a walk can be faithfully reproduced (through passive movements) when sitting on the seating furniture according to the invention, thus reducing the sensorimotor amnesia that develops during periods of inactivity.

Further embodiments of the invention are illustrated in more detail with reference to the following description and the drawing.

The drawing shows
- Fig. 1: schematic representation of a piece of seating furniture in a first swivel position of the seat and backrest,
- Fig. 2: schematic representation of a piece of seating furniture in a second swivel position of the seat and backrest,
- Fig. 3a: three-dimensional, schematic representation of the seat and backrest,
- Fig. 3b: schematic side view of the seat or backrest in a first swivel position,
- Fig. 3c: schematic side view of the seat or backrest in a central position,
- Fig. 3d: schematic side view of the seat or backrest in a second swivel position,
- Fig. 4 a: block diagram of a control device,
- Fig. 5: schematic representation of a recliner in an upright basic position and
- Fig. 6: schematic representation of a recliner in a reclined position.

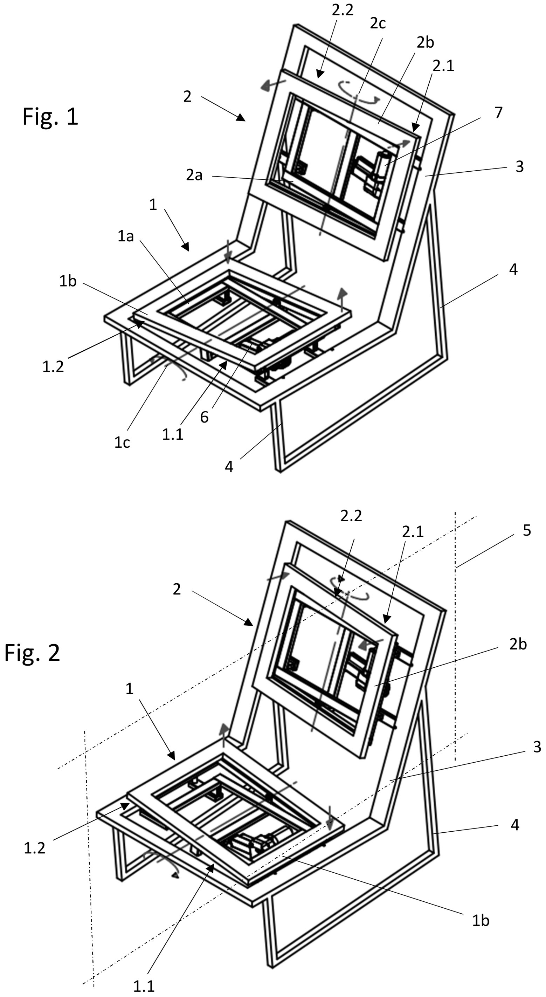

Figs. 1 and 2 show a schematic diagram of the seating furniture according to the invention, whereby any upholstery has been omitted. It has a swivel seat 1 and a swivel backrest 2. For this purpose, the seat 1 has a main seat frame 1a and a pivotable seat frame 1b, wherein the pivotable seat frame 1b is mounted on the main seat frame 1a so as to pivot about a first axis 1c. In a corresponding manner, the backrest 2 has a main backrest frame 2a and a pivotable backrest frame 2b, wherein the pivotable backrest frame 2b is mounted on the main backrest frame 2a so as to pivot about the second axis 2c. The main seat frame and the backrest frame are fastened in a frame 3 of the seating furniture, whereby the frame 3 is supported on a support surface via legs 4.

The seating furniture has a longitudinal central plane 5 (see Fig. 2), which divides the seating furniture into a right and a left half and coincides with the sagittal plane of a person sitting on the seating furniture. The first axis 1c and the second axis 2c extend in this longitudinal central plane 5, with the first axis 1c and the second axis 2c intersecting at an angle that essentially corresponds to the angle between the seat 1 and the backrest 2. The seat 1 and the backrest 2 are divided by the longitudinal center plane 5 (sagittal plane) into a left and a right seat half 1.1, 1.2 and a left and right backrest half 2.1 and 2.2.

Although the pivotable seat frame 1b and the pivotable backrest frame 2b can be moved actively by the person sitting on the seating furniture, a first actuator 6 is provided in the illustrated embodiment for moving the pivotable seat frame 1b back and forth about the first axis 1c. Furthermore, the pivoting backrest frame 2b is moved back and forth about the second axis 2c by means of a second actuator 7.

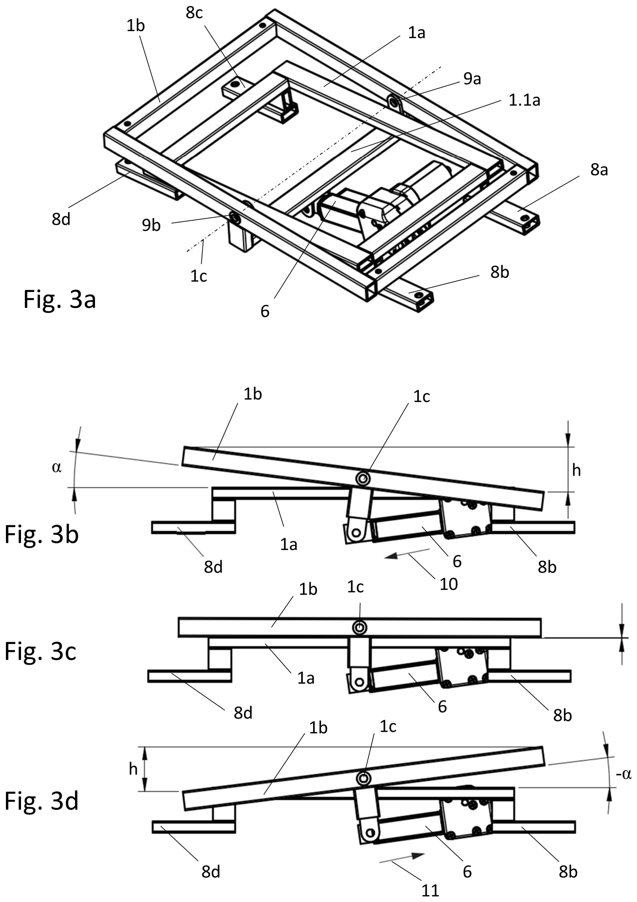

The structure and mode of operation of the seat 1 and the backrest 2 are very similar and are explained in more detail below using the example of the seat 1 in Figs. 3a to 3d. However, the explanations also apply to the backrest 2 in the same way. In the embodiment shown, the main seat frame 1a is designed as a rectangular frame and is firmly connected to the frame 3 of the seating furniture via fastening means 8a, 8b, 8c, 8d. Fastening is carried out using screw connections, for example. Two pivot points 9a, 9b are provided on two opposite areas of the main seat frame 1a, to which the pivoting seat frame 1b is pivoted about the first axis 1c. The pivoting seat frame 1b is also designed here as a rectangular frame, which provides a cross member 1.1a parallel to the first axis 1c. The first actuator 6 is designed as a linear actuator, one end of which is coupled approximately centrally to the cross-member 1.1a of the pivoting seat frame 1b and the other end of which is coupled to the main seat frame 1a.

The main seat frame 1a and the pivoting seat frame 1b are aligned parallel to each other in the central position shown in Fig. 3c. Actuating the first actuator 6 in the direction of the arrow 10 causes the pivoting seat frame 1b to rotate about the first axis 1c, whereby the left half shown in Fig. 3b is raised and the right half is lowered. The maximum swivel angle α can preferably be in the range of 5 to 20°. This results in a height difference h between the left and right edges of the pivoting seat frame 1b in the range of 20 to 80 mm for instance. Actuating the first actuator 6 in the opposite direction (Fig. 3d, arrow 11) causes the pivoting seat frame 1b to rotate counterclockwise about the first axis 1c.

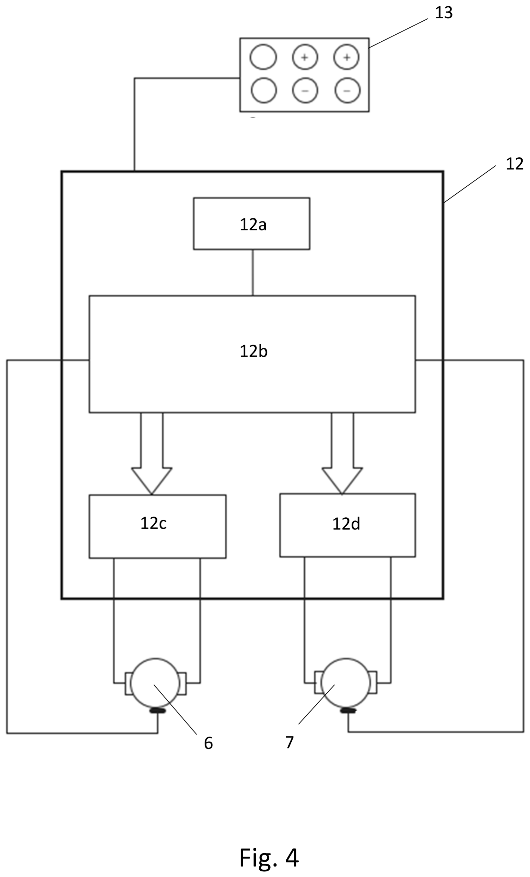

To control the first and/or second actuator 6, 7, a drive control 12 (Fig. 4) is provided, which is designed so that the first and/or second actuator 6, 7 perform a reciprocating swivel movement of the seat 1 and/or the backrest 2 between the two positions shown in Fig. 3b and Fig. 3d. However, it is of course also conceivable that the swivel angle α varies. Furthermore, it may be provided that the user can adjust the speed and/or the frequency of the swivel movement triggered by the first and/or second actuator 6, 7. In particular, a remote control 13 or an actuating device provided on the seating furniture can be provided for this purpose.

The drive control 12 essentially has a voltage source 12a, a microprocessor 12b and a Mosfet H bridge 12c, 12d assigned to each of the two actuators, so that the first and/or second actuator can be controlled in a wide frequency range by means of pulse width modulation.

The drive control 12 is preferably designed for synchronized movement of the swivel seat frame 1b and the swivel backrest frame 2b, so that when the right seat half 1.2 is lowered, the left seat half 1.1 is raised and, at the same time, the right backrest half 2.2 moves forward and the left backrest half 2.1 moves backward (Fig. 1) and, correspondingly, when the left seat half 1.1 is lowered, the right seat half 1.2 is raised and, at the same time, the left backrest half 2.1 moves forward and the right backrest half 2.2 moves backward (Fig. 2), so that when a person is sitting on the seat, a forced torsion of the torso relative to the pelvis results.

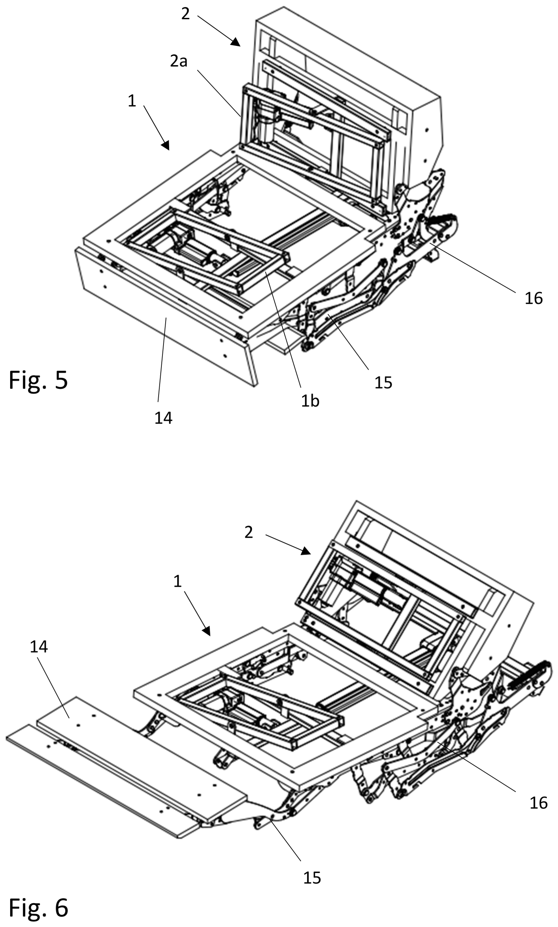

Figs. 5 and 6 show a piece of seating furniture according to a second embodiment of the invention, which is a recliner in an upright basic position (Fig. 5) and in a reclined position (Fig. 6). The recliner also has a seat with a swivel seat frame 1b and a backrest 2 with a swivel backrest frame 2b. A footrest 14 is also provided, which can be moved from a retracted position (Fig. 5) to an extended position (Fig. 6) via a footrest mechanism 15. Furthermore, a seat and backrest adjustment mechanism 16 is provided, which can adjust the recliner between the upright basic position (Fig. 5) and the reclined position (Fig. 6) in a generally known manner. In the reclined position, the angle between the seat and backrest is significantly greater than in the upright basic position. In addition, the front edge of the seat can be slightly raised in the reclined position and the footrest 14 is extended. Otherwise, the pivotable seat frame 1b and the pivotable backrest frame 2b also mobilize the pelvic and back area.

In both embodiments, the pivotable backrest frame 2b in particular causes the shoulders to move forwards and backwards, while the pelvis is moved up and down by the pivotable seat frame. Mobilization is particularly efficient if the movement of the pivotable backrest frame 2b and pivotable seat frame 1b are synchronized with each other. In particular, an opposing synchronization can be set in which the right half of the backrest frame moves forwards and the left half of the seat frame moves upwards, with the left half of the backrest frame then moving forwards and the right half of the seat frame moving upwards. The remote control 13 can be used to start and stop the reciprocating swivel movement of the pivotable seat frame 1b and the pivotable backrest frame 2b. It is also conceivable that a predetermined number of swivel cycles are executed and the swivel movements are then ended automatically. In addition, the speed and/or frequency of the reciprocating swivel movement can be set and changed.

## Claims

1. Seating furniture with a seat (1) pivotable about a first axis (1c), which extends parallel to the seat (1), and a backrest (2) pivotable about a second axis (2c), which extends parallel to the backrest (2),
**characterized in that** the seating furniture has a longitudinal central plane (5) and the first axis (1c) and the second axis (2c) extend in this longitudinal central plane (5).

2. Seating furniture according to claim 1, **characterized in that** the first axis (1c) and the second axis (2c) intersect and the angle between the first axis (1c) and the second axis (2c) essentially corresponds to the angle between the seat (1) and the backrest (2).

3. Seating furniture according to one or more of the preceding claims, **characterized in that** the seat (1) has a seat frame (1b) which can pivot about the first axis (1c).

4. Seating furniture according to one or more of the preceding claims, **characterized in that** the backrest (2) has a backrest frame (2b) which can pivot about the second axis (2c).

5. Seating furniture according to one or more of the preceding claims, **characterized in that** the seat (1) has a main seat frame (1a) and the pivotable seat frame (1b) is pivotable relative to the main seat frame (1a) about the first axis (1c).

6. Seating furniture according to one or more of the preceding claims, **characterized in that** the backrest (2) comprises a main backrest frame (2a) and the pivotable backrest frame (2b) is pivotable relative to the main backrest frame (2a) about the second axis (2c).

7. Seating furniture according to one or more of the preceding claims, **characterized in that** a first actuator (6) is provided for moving the pivotable seat (1) back and forth about the first axis (1c).

8. Seating furniture according to one or more of the preceding claims, **characterized in that** a second actuator (7) is provided for moving the pivotable backrest (2) back and forth about the second axis (2c).

9. Seating furniture according to claims 7 and 8, **characterized in that** a drive control (12) is provided for controlling the first and/or second actuator (6, 7), the drive control (12) being designed in such a way that the first and/or second actuator (6, 7) exert a reciprocating pivoting movement of the seat (1) and/or the backrest (2).

10. Seating furniture according to claim 9, **characterized in that** the longitudinal center plane spanned by the first and second axes (1c, 2c) (5) of the seating furniture coincides with the sagittal plane of a person sitting on the seating furniture, and the seat and the backrest are divided by the sagittal plane into a left and a right seat half and a left and a right backrest half,
wherein the drive control is designed for a synchronized movement of the seat frame and the backrest frame, so that when the right seat half is lowered, the right backrest half moves forward and, correspondingly, when the left seat half is lowered, the left backrest half moves forward, so that when a person is sitting on the seating furniture, a forced torsion of the torso relative to the pelvis results.

11. Seating furniture according to claim 9, **characterized in that** the drive control (12) is designed in such a way that the speed of the swivel movement triggered by the first and/or second actuator (6, 7) is adjustable.

12. Seating furniture according to claim 9 or 10, **characterized in that** the drive control (12) is designed in such a way that the frequency of the to-and-fro movement of the seat (1) and/or the backrest (3) triggered by the first and/or second actuator (6, 7) is adjustable.

13. Seating furniture according to claim 12, **characterized in that** the drive control (12) is designed to control the first and/or second actuator (6, 7) by means of pulse width modulation.

14. Seating furniture according to one or more of the preceding claims, **characterized in that** the longitudinal central plane (5) of the seating furniture, which is spanned by the first and second axes (1c, 2c), coincides with the sagittal plane of a person sitting on the seating furniture.

## Amended claims

### Amended claims in accordance with Rule 137(2) EPC.

1. Seating furniture with a seat (1) pivotable about a first axis (1c), which extends parallel to the seat (1), and a backrest (2) pivotable about a second axis (2c), which extends parallel to the backrest (2), wherein the seating furniture has a longitudinal central plane (5) and the first axis (1c) and the second axis (2c) extend in this longitudinal central plane (5), **characterized in that** the seat (1) has a main seat frame (1a) and the pivotable seat frame (1b) is pivotable relative to the main seat frame (1a) about the first axis (1c) and/or that the backrest (2) comprises a main backrest frame (2a) and the pivotable backrest frame (2b) is pivotable relative to the main backrest frame (2a) about the second axis (2c).

2. Seating furniture according to claim 1, **characterized in that** the first axis (1c) and the second axis (2c) intersect and the angle between the first axis (1c) and the second axis (2c) essentially corresponds to the angle between the seat (1) and the backrest (2).

3. Seating furniture according to one or more of the preceding claims, **characterized in that** the seat (1) has a seat frame (1b) which can pivot about the first axis (1c).

4. Seating furniture according to one or more of the preceding claims, **characterized in that** the backrest (2) has a backrest frame (2b) which can pivot about the second axis (2c).

5. Seating furniture according to one or more of the preceding claims, **characterized in that** a first actuator (6) is provided for moving the pivotable seat (1) back and forth about the first axis (1c).

6. Seating furniture according to one or more of the preceding claims, **characterized in that** a second actuator (7) is provided for moving the pivotable backrest (2) back and forth about the second axis (2c).

7. Seating furniture according to claims 5 and 6, **characterized in that** a drive control (12) is provided for controlling the first and/or second actuator (6, 7), the drive control (12) being designed in such a way that the first and/or second actuator (6, 7) exert a reciprocating pivoting movement of the seat (1) and/or the backrest (2).

8. Seating furniture according to claim 7, **characterized in that** the longitudinal center plane spanned by the first and second axes (1c, 2c) (5) of the seating furniture coincides with the sagittal plane of a person sitting on the seating furniture, and the seat and the backrest are divided by the sagittal plane into a left and a right seat half and a left and a right backrest half,
wherein the drive control is designed for a synchronized movement of the seat frame and the backrest frame, so that when the right seat half is lowered, the right backrest half moves forward and, correspondingly, when the left seat half is lowered, the left backrest half moves forward, so that when a person is sitting on the seating furniture, a forced torsion of the torso relative to the pelvis results.

9. Seating furniture according to claim 7, **characterized in that** the drive control (12) is designed in such a way that the speed of the swivel movement triggered by the first and/or second actuator (6, 7) is adjustable.

10. Seating furniture according to claim 7 or 8, **characterized in that** the drive control (12) is designed in such a way that the frequency of the to-and-fro movement of the seat (1) and/or the backrest (3) triggered by the first and/or second actuator (6, 7) is adjustable.

11. Seating furniture according to claim 10, **characterized in that** the drive control (12) is designed to control the first and/or second actuator (6, 7) by means of pulse width modulation.

12. Seating furniture according to one or more of the preceding claims, **characterized in that** the longitudinal central plane (5) of the seating furniture, which is spanned by the first and second axes (1c, 2c), coincides with the sagittal plane of a person sitting on the seating furniture.
